# EUROPEAN PATENT SPECIFICATION

(11) **EP 4 059 751 B1**
(45) Date of publication and mention of the grant of the patent: **19.04.2023**
(21) Application number: 22157025.2
(22) Date of filing: 16.02.2022
(51) Int. Cl.: B60J 3/04, B60J 3/00

(54) **DIMMING GLASS CONTROL DEVICE AND DIMMING CONTROL SYSTEM**
DIMMSCHEIBENSTEUERVORRICHTUNG UND DIMMSTEUERSYSTEM
DISPOSITIF DE COMMANDE DE VERRE DE GRADATION ET SYSTÈME DE COMMANDE DE GRADATION

(30) Priority: 17.03.2021 JP 2021043419
(43) Date of publication of application: 21.09.2022
(73) Proprietor: Yazaki Corporation, Minato-ku Tokyo 108-8333 (JP)
(72) Inventor: Katsumata, Kenichi, Shizuoka (JP)
(74) Representative: Grünecker Patent- und Rechtsanwälte PartG mbB

(56) References cited:
- US-A1- 2017 268 279
- US-B2- 7 245 205

## Description

### BACKGROUND OF THE INVENTION

### Technical Field

The present invention relates to a dimming glass control device for controlling a dimming glass, and a dimming control system including such a dimming glass control device.

### Background Art

Conventionally, dimming glasses with dimming films have been used e.g. for window glasses for a vehicle, wherein the dimming films have transmittances which are changed depending on application of an AC voltage (see e.g. Patent Document 1). According to this Patent Document 1, such a dimming glass is applied to a window glass for a vehicle, wherein a transmittance of the window glass is changed e.g. via user operation. Patent document 2 discloses the preamble of claim 1. Patent document 3 discloses the document closest to the characterising portion of claim 1.

### Citation List

### Patent Literature

Patent Document 1: JP 2019-054759 A
Patent Document 2: US 7 245 205 B2
Patent Document 3: US 2017/268279 A1

### SUMMARY OF THE INVENTION

Here, a dimming glass may be used as a rear glass for a vehicle. In this case, a user may visually confirm a rear status through the rear glass during backward movement. However, depending on a status outside the vehicle, such as brightness/darkness situation, such visual confirmation may be undesirably difficult when the rear glass is set to a non-transparent configuration. Similar situations may occur under a status such as raining. In the case where such visual confirmation of the rear status is difficult, it is necessary to set the rear glass to a transparent configuration by the user each time. Consequently, there is room for improvement of the user friendliness.

Therefore, the present invention is focused on the problem as described above, and an objective of the present invention is to provide a dimming glass control device which enables a dimming glass as a rear glass to be controlled while improving the user friendliness regarding backward movement of a vehicle. Another objective of the present invention is to provide a dimming control system with such a dimming glass control device.

In order to achieve this objective, a dimming glass control device is configured for a dimming glass, the dimming glass including a dimming film arranged on a rear glass for a vehicle, wherein the dimming film has a transmittance of light which is changed depending on application of an AC voltage, the dimming glass control device including: a voltage applying section configured to change the transmittance by application and non-application of the AC voltage to the dimming film; a status detecting section configured to detect at least one status of a brightness/darkness status in an outside of the vehicle, a weather status, a status of switching-on instruction for a headlight, a status of operation instruction for a rear wiper in case of the rear wiper being provided in the vehicle, or a movement status of the vehicle; and a control section configured to cause the voltage applying section depending on a predetermined instruction to reduce the transmittance of the dimming film, wherein the control section is further configured to prohibit reduction of the transmittance by the voltage applying section, upon a detection result of the status detecting section indicating at least one state of the following states: a dark state in the outside of the vehicle which is equal to or darker than a predetermined degree; a rain state; a light on-state for which switching-on of the headlight has been instructed; a wiper on-state for which operation of the rear wiper has been instructed; or a backward moving state in which the vehicle moves backward.

Furthermore, in order to achieve the above-described objective, a dimming control system includes: a dimming glass including a dimming film arranged on a rear glass for a vehicle, wherein the dimming film has a transmittance of light which is changed depending on application of an AC voltage; and the dimming glass control device as described above configured to control the transmittance of the dimming film of the dimming glass.

According to the dimming glass control device and dimming control system as described above, the control section prohibits of reduction of the transmittance of the dimming film of the dimming glass as the rear glass by the voltage applying section, upon the detection result of the status detecting section indicating at least one state of the following states: First, as the state for the detection result for which the reduction of the transmittance is prohibited, a dark state and rain state are conceivable, i.e., states in which a worse rear field of view through the rear glass is expected. Further, a light on-state is conceivable in which a front field of view is so dark that switching-on the headlight is necessary. Likewise, the rear field of view is expected to be dark in such a state to result in a worse visibility. Furthermore, a wiper on-state is conceivable in which it rains so much that operation of the rear wiper is necessary, so that the rear field of view through the rear glass is actually worse. Moreover, a backward moving state is conceivable in which the vehicle moves backward so that it is expected that the user looks backward, regardless of good or bad visibility. Namely, the control section prohibits reduction of the transmittance in order to suppress further degradation of the rear field of view when a state has occurred in which the rear field of view through the rear glass is expected to be worse, the rear field of view is actually worse, and/or it is expected that the user looks backward. Accordingly, with regard to backward operation of the vehicle, it is not necessary for the user to pay attention to reduction of the transmittance of the dimming glass as the rear glass so that the user can concentrate himself/herself to the backward operation. In this manner, the dimming glass control device and dimming control system as described above enables the dimming glass as the rear glass to be controlled while improving the user friendliness regarding the backward operation of the vehicle.

### BRIEF DESCRIPTION OF THE DRAWINGS

Fig. 1 is a schematic block diagram illustrating a dimming control system including a dimming glass control device according to an embodiment;
Fig. 2 is a schematic sectional view of a dimming glass according to Fig. 1; and
Fig. 3 is a schematic flowchart illustrating a flow of a control process which is performed in the dimming glass control device according to Fig. 1.

### DETAILED DESCRIPTION OF THE PREFERRED EMBODIMENTS

Hereinafter, embodiments of a dimming glass control device and a dimming control system will be described.

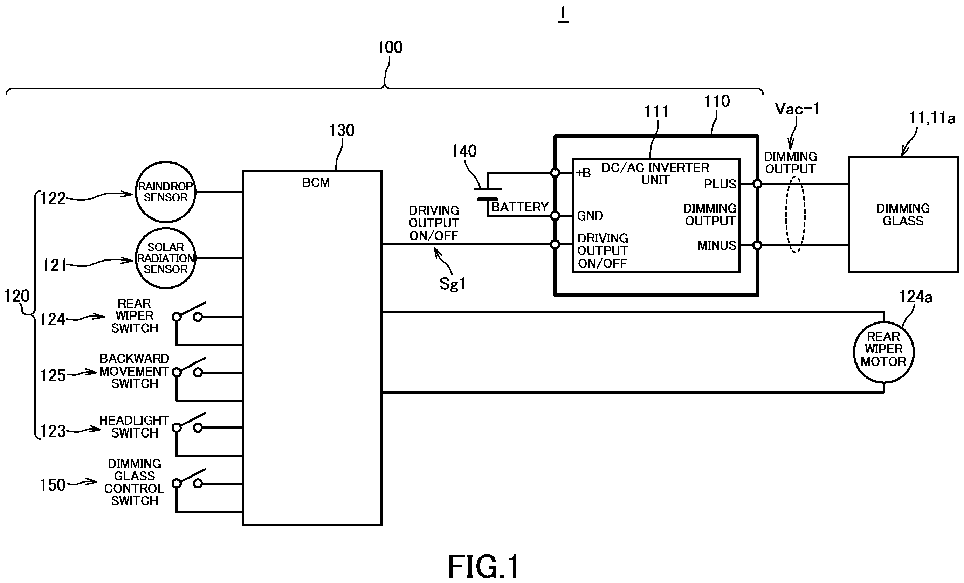

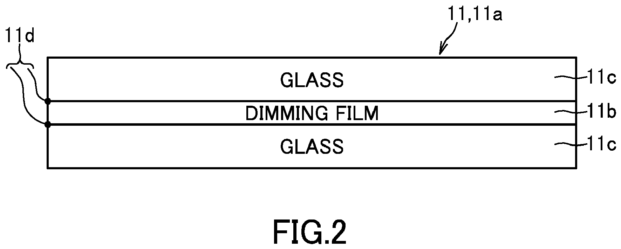

Fig. 1 shows a schematic block diagram illustrating a dimming control system including a dimming glass control device according to an embodiment. Fig. 2 shows a schematic sectional view of a dimming glass according to Fig. 1.

The dimming control system 1 according to Fig. 1 includes a dimming glass 11 and a dimming glass control device 100.

As shown in Fig. 2, the dimming glass 11 includes a dimming film 11b which is arranged on a rear glass 11a for a vehicle. The dimming film 11b is arranged so as to be interposed between two glass panes 11c. Further, a pair of electric wires 11d is connected to the dimming film 11b, wherein the pair of electric wires 11d serves for applying an AC voltage to the dimming film 11b. The dimming film 11b is a film element having a transmittance of light which is changed depending on the AC voltage applied via these electric wires 11d.

The dimming glass control device 100 according to Fig. 1 is configured to control the transmittance for the dimming film 11b of the dimming glass 11 which has the above-described configuration. The dimming glass control device 100 includes a voltage applying section 110, a status detecting section 120, a control section 130, a battery 140 and a control switch 150.

The voltage applying section 110 changes the transmittance for the dimming film 11b of the dimming glass 11 between two values of substantially 0 % and substantially 100% by application and non-application of a dimming output Vac-1 in the form of AC voltage to the dimming film. The voltage applying section 110 according to the present embodiment further includes an AC voltage generating section 111 configured to generate the dimming output Vac-1. The AC voltage generating section 111 is configured as a DC/AC inverter which converts a DC voltage of the battery 140 into an AC voltage. The AC voltage generating section 111 is connected to the dimming film 11b via the electric wires 11d as shown in Fig. 2 so that the AC voltage generating section 111 can apply the dimming output Vac-1 as the converted AC voltage to the dimming film 11b.

The status detecting section 120 is a section which detects at least one of a brightness/darkness status in the outside of the vehicle, a weather status, a status of switching-on instruction for a headlight, a status of operation instruction for a rear wiper of the vehicle, or a movement status of the vehicle, and according to the present embodiment, to detect all of these status. The status detecting section 120 includes a solar radiation sensor 121, a raindrop sensor 122, a headlight switch 123, a rear wiper switch 124, and a backward movement switch 125. The solar radiation sensor 121 is configured to detect the brightness/darkness status in the outside of the vehicle. The raindrop sensor 122 is configured to detect raindrops for detecting a weather status, i.e., whether a rain state exists or not. The headlight switch 123 is configured to instruct switching on/off the headlight in response to operation of the user. According to the present embodiment, this headlight switch 123 is used as a sensor for detecting the status of switching-on instruction for the headlight, e.g. whether the light on-state exists in which switching-on the headlight has been instructed. The rear wiper switch 124 is configured to instruct switching on/off a rear wiper in response to operation by the user, the rear wiper being installed on the vehicle. The rear wiper switch 124 is connected to a rear wiper motor 124a for driving a rear wiper, wherein setting the rear wiper switch 124 to an on-state results in activation of the rear wiper motor 124a to initiate operation of the rear wiper, while setting the rear wiper switch 124 to an off-state results in stopping the rear wiper 124a and thus stopping the rear wiper. According to the present embodiment, the rear wiper switch 124 is used as a sensor for detecting the status of operation instruction for the rear wiper, i.e., whether the wiper on-state exists in which operation of the rear wiper has been instructed. The backward movement switch 125 is configured to move the vehicle backward in response to operation by the user. According to the present embodiment, the backward movement switch 125 is used as a sensor for detecting the movement status of the vehicle, i.e., whether the backward moving state exists in which the vehicle moves backward.

The control section 130 is configured to control the voltage applying section 110. According to the present embodiment, a BCM (Body Control Module) installed in the vehicle functions as the control section 130. The control section 130 causes the voltage applying section 110 depending on a predetermined instruction to reduce the transmittance of the dimming film 11b. The control section 130 provides a driving output Sg1 to the AC voltage generating section 111 of the voltage applying section 110 to control a voltage output of the AC voltage generating section 111, wherein the driving output Sg1 is a binary signal having on/off values. The AC voltage generating section 111 which has received the driving output Sg1 having an on-value from the control section 130 provides the dimming output Vac-1 in the form of an AC voltage to the dimming film 11b. In this manner, the dimming output Vac-1 is provided to the dimming film 11b from the AC voltage generating section 111, which reduces the transmittance of the dimming film 11b.

Furthermore, depending on the detection result of the status detecting section 120, the control section 130 stops the driving output Sg1 for the voltage applying section 110 in order to prohibit the reduction of the transmittance. The prohibition of the transmittance reduction is initiated upon the detection result indicating at least one of the following states: the dark state in the outside of the vehicle which is equal to or darker than a predetermined degree; the rain state; the light on-state; the wiper on-state; or the backward moving state. According to the present embodiment, such a detection result indicates all of these states. The dark state is detected by the solar radiation sensor 121, and the rain state is detected by the raindrop sensor 122. The light on-state is detected by the headlight switch 123, the wiper on-state is detected by the rear wiper switch 124, and the backward moving state is detected by the backward movement switch 125.

The battery 140 is an on-board DC power supply for a vehicle, wherein a DC voltage is provided from this battery 140 to the AC voltage generating section 111 of the voltage applying section 110. The AC voltage generating section 111 converts this DC voltage into an AC voltage as described above.

The control switch 150 is a switch which receives a reduction operation of the transmittance by a user of the dimming control system 1 and the dimming glass control device 100, wherein the user is a passenger of the vehicle. If the control switch 150 is set to an on-state, the control section 130 sets the driving output Sg1 for the AC voltage generating section 111 of the voltage applying section 110 to an on-value, wherein the AC voltage generating section 111 then sets the dimming output Vac-1 for the dimming film 11b to an on-value so that the transmittance is reduced. If the control switch 150 is set to an off-state, the control section 130 sets the driving output Sg1 to an off-value, wherein the AC voltage generating section 111 then sets the dimming output Vac-1 to an off-value so that the dimming film 11b has its original transmittance. The dimming film 11b according to the present embodiment is configured such that the transmittance is substantially 100 %, i.e., transparent, when the dimming output Vac-1 has an off-value, and substantially 0 %, i.e., non-transparent, when the dimming output Vac-1 has an on-value.

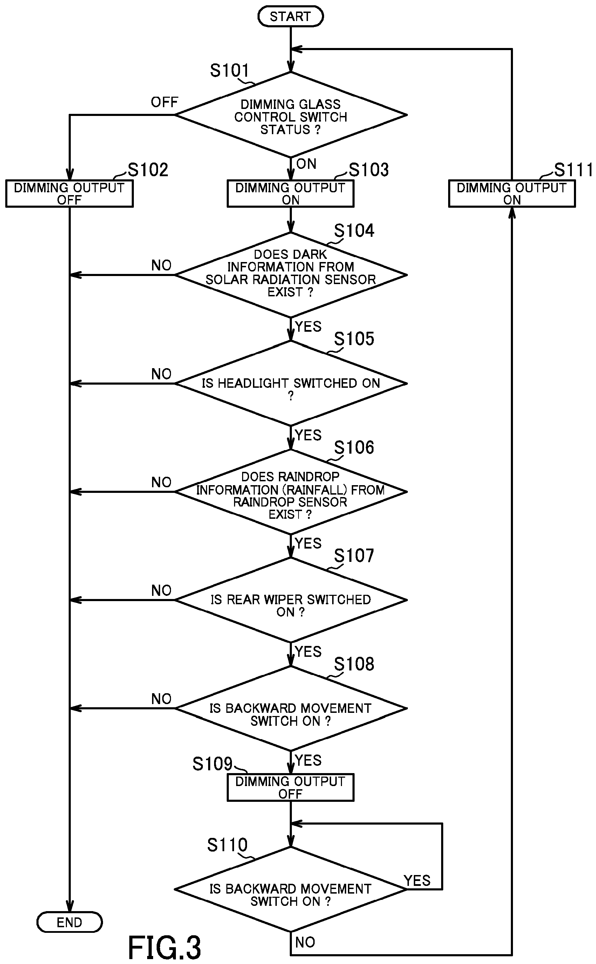

Fig. 3 shows a schematic flowchart illustrating a flow of a control process which is performed in the dimming glass control device according to Fig. 1.

The control process as shown in this flowchart is started by switching the power supply to the dimming glass control device 100. Once the process has been started, it is first determined in the control section 130 to which of an on- or off-state the control switch 150 is set (step S101).

If the control switch 150 is set to an off-state, the control section 130 sets the driving output Sg1 to an off-value to set the dimming output Vac-1 for the dimming film 11b to an off-value so that the transmittance is substantially 100 %, i.e. transparent (step S102), wherein the process is then ended.

If the control switch 150 is set to an on-state, the control section 130 sets the driving output Sg1 to an on-value to set the dimming output Vac-1 for the dimming film 11b to an on-value so that the transmittance is reduced to substantially 0 %, i.e. non-transparent (step S103).

Under this transmittance having been thus reduced, the control section 130 determines via the solar radiation sensor 121 whether the dark state is detected or not (step S104). If the dark state is not detected (NO-determination in step S104), the control section 130 ends the process.

If the dark state is detected (YES-determination in step S104), the control section 130 determines via the headlight switch 123 whether the light on-state is detected or not (step S105). If the light on-state is not detected (NO-determination in step S105), the control section 130 ends the process.

If the light on-state is detected (YES-determination in step S105), the control section 130 determines via the raindrop sensor 122 whether the rain state is detected or not (step S106). If the rain state is not detected (NO-determination in step S106), the control section 130 ends the process.

If the rain state is detected (YES-determination in step S106), the control section 130 determines via the rear wiper switch 124 whether the wiper on-state is detected or not (step S107). If the wiper on-state is not detected (NO-determination in step S107), the control section 130 ends the process.

If the wiper on-state is detected (YES-determination in step S107), the control section 130 determines via the backward movement switch 125 whether the backward moving state is detected or not (step S108). If the backward moving state is not detected (NO-determination in step S108), the control section 130 ends the process.

If the backward moving state is detected (YES-determination in step S108), the control section 130 sets the driving output Sg1 - which has been set to an on-value in step S103 - to an off-value to prohibit reduction of the transmittance by the voltage applying section 110 (step S109). As a result of the prohibition, the transmittance of the dimming film 11b returns to a state before the reduction, i.e., a transparent state of substantially 100 % transmittance.

After prohibition of the transmittance reduction, the control section 130 determines again via the backward movement switch 125 whether the backward moving state is detected or not (step S110). If the backward moving state is detected (YES-determination in step S110), i.e., the vehicle continues to move backward, the determination process according to step S110 is repeated. On the other hand, if the backward moving state is not detected (NO-determination in step S110), i.e., the backward movement has been stopped, the driving output Sg1 is set back to the on-value to cancel the prohibition of the transmittance reduction (step S111). Thereafter, the process returns to step S101, and the following processes are repeated.

According to the dimming glass control device 100 and dimming control system 1 of the embodiments as described above, the control section 130 prohibits reduction of the transmittance upon the detection result of the status detecting section 120 indicating at least one of the following states (all of the states according to the present embodiment): First, as the state for the detection result for which the reduction of the transmittance is prohibited, a dark state and rain state are conceivable, i.e., states which are expected to result in a worse rear field of view through the rear glass 11a. Further, a light on-state is conceivable in which a front field of view is so dark that switching-on the headlight is necessary. Likewise, the rear field of view is dark in such a state, and a worse visibility is expected. Furthermore, a wiper on-state is conceivable in which it rains so much that operation of the rear wiper is necessary, so that the rear field of view through the rear glass 11a is actually worse. Moreover, a backward moving state is conceivable in which the vehicle moves backward and the user is expected to look backward, regardless of good or bad visibility. Namely, the control section 130 prohibits reduction of the transmittance in order to suppress further degradation of the rear field of view when a state has occurred in which the rear field of view through the rear glass 11a is expected to be worse, the rear field of view is actually worse, and/or it is expected that the user looks backward. Accordingly, with regard to backward operation of the vehicle, it is not necessary for the user to pay attention to reduction of the transmittance of the dimming glass 11 as the rear glass 11a so that the user can concentrate himself/herself to the backward operation. In this manner, the dimming glass control device 100 and dimming control system 1 according to the present embodiment enables the dimming glass 11 as the rear glass 11a to be controlled while improving the user friendliness regarding the backward operation of the vehicle.

According to the present embodiment, during the reduction of the transmittance for the dimming film 11b, the control section 130 returns the transmittance to a state before the reduction when the detection result of the status detecting section 120 indicates the at least one of the states as described above (all of the states according to the present embodiment). With this configuration, even after reducing the transmittance of the dimming film 11b for the rear glass 11a, the transmittance returns to the state before the reduction when the state(s) regarding the rear field of view as described above is detected. This eliminates the necessity for performing an additional operation by a user to return the transmittance. This means that the above-described configuration enables the user friendliness to be further improved.

Furthermore, the status detecting section 120 according to the present embodiment includes the backward movement switch 125 for detecting the movement status of the vehicle. In addition, after prohibiting the reduction of the transmittance, the control section 130 cancels the prohibiting the reduction of the transmittance when the detection result of the status detecting section 120 indicates a stop of a backward movement of the vehicle. With this configuration, when the backward movement of the vehicle is stopped and it is not necessary for the user to look backward with regard to the rear glass 11a, the prohibition of the transmittance reduction is cancelled so that the normal transmittance reduction is allowed. This means that the above-described configuration eliminates the necessity for performing an additional operation for cancelling the prohibition of reduction when there is no need for the user to look backward anymore, which can further improve the user friendliness.

Moreover, the status detecting section 120 according to the present embodiment is configured to detect all of the brightness/darkness status outside the vehicle, the weather status, the status of switching-on instruction for the headlight, the status of operation instruction for the rear wiper, and the movement status of the vehicle. In addition, the control section 130 prohibits the reduction of the transmittance when the detection result of the status detecting section 120 indicates all of the dark state, the rain state, the light on-state of the headlight, the wiper on-state of the rear wiper, and the backward moving state of the vehicle. With this configuration, the reduction of transmittance is not prohibited before it is exactly determined that the rear field of view is expected to be degraded and the user needs the rear field of view. This means that the above-described configuration is preferable since it can limit occurrence of a burdensome situation for users, such as frequent prohibition of the transmittance reduction.

It is to be noted that the embodiments as described above merely show representative embodiments for the present invention, and the present invention is not limited thereto. This means that various modifications may be implemented without departing from the core of the present invention as defined by the claims. It is to be understood that such various modifications fall within the scope of the present invention as defined by the claims, as long as they include features of the dimming glass control device and dimming control system.

For example, as an example for the dimming glass, the above embodiment shows the dimming glass 11 including the one dimming film 11b which is arranged substantially across the entire rear glass 11a. However, the dimming glass is not limited thereto, but the dimming film may be arranged in a partial region of the rear glass, or a plurality of dimming films may be arranged in a plurality of positions on the rear glass.

Furthermore, as an example for the status detecting section, the above embodiment shows the status detecting section 120 configured to detect all of the brightness/darkness status outside the vehicle, the weather status, the status of switching-on instruction for the headlight, the status of operation instruction for the rear wiper, and the movement status of the vehicle. However, the status detecting section is not limited thereto. The status detecting section may be configurated with any specific detection form which detects at least one of the brightness/darkness status outside the vehicle, the weather status, the status of switching-on instruction for the headlight, the status of operation instruction for the rear wiper, or the movement status of the vehicle. For example, the status detecting section may be configured to detect only any one of a plurality of status as described above, or may be also configured to detect more than one of these status - in this case, it is not necessary that the status detecting section detects all of the status. Furthermore, as long as the status detecting section is configured to detect at least one of the status as described above, it may be configured to detect one or more additional status.

Further, as an example for the status detecting section, the above embodiment shows the status detecting section 120 including the solar radiation sensor 121, raindrop sensor 122, headlight switch 123, rear wiper switch 124, and backward movement switch 125. However, the status detecting section is not limited thereto, but the status detection may be configured in any appropriate manner. For example, instead of sensors such as the solar radiation sensor 121 and/or raindrop sensor 122, the brightness/darkness status outside the vehicle and/or the weather status may be detected based on a position of the vehicle and Internet information. Moreover, the status of switching-on instruction for the headlight, the status of operation instruction for the rear wiper, and the movement status of the vehicle may be detected without the headlight switch 123, rear wiper switch 124 and backward movement switch 125. For example, it may be directly detected whether the headlight is switched on or not, whether the rear wiper is in operation or not, and in which of forward moving/backward moving/stop state the vehicle is.

Moreover, as an example for the control section, the above embodiment shows the control section 130 configured to return the transmittance to a state before the reduction when the status detecting section 120 detects the state as described above during the reduction of the transmittance. However, the control section is not limited thereto, but may be configured e.g. to perform only prohibition of the transmittance reduction. In this case, when the transmittance has been reduced before prohibiting the reduction, an additional operation is performed by the user to return the transmittance to the state before the reduction. However, as described above, it is possible to further improve the user friendliness by the control section 130 returning the transmittance to the state before the reduction.

Furthermore, as an example for the control section, the above embodiment shows the control section 130 configured to cancel the prohibiting the reduction of the transmittance when the detection result of the status detecting section 120 indicates a stop of a backward movement of the vehicle after prohibiting the reduction of the transmittance. However, the control section is not limited thereto, but it is also possible that after prohibiting the transmittance reduction by the control section, the cancellation based on the stop of backward movement of the vehicle is not performed. For example, the prohibition may be cancelled by additional user operation, such as switching on/off the power supply. However, as described above, it is possible to further improve the user friendliness by cancelling the prohibition of the transmittance reduction upon the stop of backward movement of the vehicle.

Furthermore, as an example for the control section, the above embodiment shows the control section 130 configured to prohibit the reduction of the transmittance upon detecting all of the dark state, the rain state, the light on-state for the headlight, the wiper on-state for the rear wiper, and the backward moving state of the vehicle. However, the control section is not limited thereto. As long as the control section is configured to prohibit the reduction of the transmittance upon detecting at least one of the dark state, the rain state, the light on-state for the headlight, the wiper on-state for the rear wiper, and the backward moving state of the vehicle, any specific criteria for the prohibition may be provided. For example, the control section may be configured to prohibit the reduction of the transmittance only when any one of the states as described above is detected, or may be configured to prohibit the reduction of the transmittance when more than one of the states are detected - in this case, it is not necessary to detect all of the states. However, as described above, it is possible to limit occurrence of a burdensome situation for users, such as frequent prohibition of the transmittance reduction, by the control section 130 prohibiting the reduction of the transmittance when all of the above states are detected.

### Reference Signs List

- 1: Dimming control system
- 11: Dimming glass
- 11a: Rear glass
- 11b: Dimming film
- 11c: Glass panes
- 11d: Electric wires
- 100: Dimming glass control device
- 110: Voltage applying section
- 111: AC voltage generating section
- 120: Status detecting section
- 121: Solar radiation sensor
- 122: Raindrop sensor
- 123: Headlight switch
- 124: Rear wiper switch
- 124a: Rear wiper motor
- 125: Backward movement switch
- 130: Control section
- 140: Battery
- 150: Control switch
- Sg1: Driving output
- Vac-1: Dimming output

## Claims

1. A dimming glass control device (100) for a dimming glass (11), the dimming glass (11) including a dimming film (11b) arranged on a rear glass (11a) for a vehicle, wherein the dimming film (11b) has a transmittance of light which is changed depending on application of an AC voltage, the dimming glass control device (100) comprising:
a voltage applying section (110) configured to change the transmittance by application and non-application of the AC voltage to the dimming film (11b);
a status detecting section (120) configured to detect at least one status of a brightness/darkness status in an outside of the vehicle, a weather status, a status of switching-on instruction for a headlight, a status of operation instruction for a rear wiper in case of the rear wiper being provided in the vehicle, or a movement status of the vehicle; and
a control section (130) configured to cause the voltage applying section (110) depending on a predetermined instruction to reduce the transmittance of the dimming film (11b),
**characterised in that**
the control section (130) is further configured to prohibit reduction of the transmittance by the voltage applying section (110), upon a detection result of the status detecting section (120) indicating at least one state of the following states:
a dark state in the outside of the vehicle which is equal to or darker than a predetermined degree;
a rain state;
a light on-state for which switching-on of the headlight has been instructed;
a wiper on-state for which operation of the rear wiper has been instructed; or
a backward moving state in which the vehicle moves backward.

2. The dimming glass control device (100) according to claim 1,
wherein during the reduction of the transmittance for the dimming film (11b), the control section (130) is configured to return the transmittance to a state before the reduction when the detection result of the status detecting section (120) indicates the at least one state.

3. The dimming glass control device (100) according to claim 1 or 2,
wherein the status detecting section (120) is configured to detect at least the movement status,
wherein after prohibiting the reduction of the transmittance, the control section (130) is configured to cancel the prohibiting the reduction of the transmittance when the detection result of the status detecting section (120) indicates a stop of a backward movement of the vehicle.

4. The dimming glass control device (100) according to any one of claims 1 to 3,
wherein the status detecting section (120) is configured to detect all of the brightness/darkness status, the weather status, the status of switching-on instruction, the status of operation instruction, and the movement status,
wherein the control section (130) is configured to prohibit the reduction of the transmittance upon the detection result of the status detecting section (120) indicating all of the dark state, the rain state, the light on-state, the wiper on-state, and the backward moving state.

5. A dimming control system (1) comprising:
a dimming glass (11) including a dimming film (11b) arranged on a rear glass (11a) for a vehicle, wherein the dimming film (11b) has a transmittance of light which is changed depending on application of an AC voltage; and
the dimming glass control device (100) according to any one of claims 1 to 4 configured to control the transmittance of the dimming film (11b) of the dimming glass (11).

## Patentansprüche

1. Verdunkelungsglas-Steuerungsvorrichtung (100) für ein Verdunkelungsglas (dimming glass) (11), wobei das Verdunkelungsglas (11) eine Verdunkelungsfolie (11b) einschließt, die an einer Heckscheibe (11a) für ein Fahrzeug angeordnet ist, die Verdunkelungsfolie (11b) eine Durchlässigkeit für Licht aufweist, die in Abhängigkeit von Anlegen einer Wechselspannung geändert wird, und die Verdunkelungsglas-Steuerungsvorrichtung (100) umfasst:
einen Spannungsanlege-Abschnitt (110), der so ausgeführt ist, dass er die Durchlässigkeit durch Anlegen und Nichtanlegen der Wechselspannung an die Verdunkelungsfolie (11b) ändert;
einen Statuserfassungs-Abschnitt (120), der so ausgeführt ist, dass er wenigstens einen Status von einem Helligkeits-/Dunkelheits-Status außerhalb des Fahrzeugs, einem Wetter-Status, einem Status einer Anschalt-Anweisung für einen Scheinwerfer, einem Status einer Betätigungs-Anweisung für einen Heckscheibenwischer, falls der Heckscheibenwischer an dem Fahrzeug vorhanden ist, oder einem Bewegungs-Status des Fahrzeugs erfasst; sowie
einen Steuerungs-Abschnitt (130), der so ausgeführt ist, dass er den Spannungsanlege-Abschnitt (110) in Abhängigkeit von einer vorgegebenen Anweisung veranlasst, die Durchlässigkeit der Verdunkelungsfolie (11b) zu verringern,
**dadurch gekennzeichnet, dass**
der Steuerungs-Abschnitt (130) des Weiteren so ausgeführt ist, dass er Verringerung der Durchlässigkeit durch den Spannungsanlege-Abschnitt (110) unterbindet, wenn ein Erfassungsergebnis des Statuserfassungs-Abschnitts (120) wenigstens einen Status der folgenden Status anzeigt:
einen Dunkel-Status außerhalb des Fahrzeugs, der einem vorgegebenen Grad gleich ist oder dunkler ist als dieser;
einen Regen-Status;
einen Licht-An-Status, für den Anschalten des Scheinwerfers angewiesen worden ist;
einen Scheibenwischer-An-Status, für den Betätigung des Heckscheibenwischers angewiesen worden ist; oder
einen Rückwärtsbewegungs-Status, bei dem sich das Fahrzeug rückwärts bewegt.

2. Verdunkelungsglas-Steuerungsvorrichtung (100) nach Anspruch 1,
wobei der Steuerungs-Abschnitt (130) so ausgeführt ist, dass er während der Verringerung der Durchlässigkeit für die Verdunkelungsfolie (11b) die Durchlässigkeit auf einen Status vor der Verringerung zurücksetzt, wenn das Erfassungsergebnis des Statuserfassungs-Abschnitts (120) den wenigstens einen Status anzeigt.

3. Verdunkelungsglas-Steuerungsvorrichtung (100) nach Anspruch 1 oder 2,
wobei der Statuserfassungs-Abschnitt (120) so ausgeführt ist, dass er wenigstens den Bewegungs-Status erfasst,
und der Steuerungs-Abschnitt (130) so ausgeführt ist, dass er nach Unterbinden der Verringerung der Durchlässigkeit das Unterbinden der Verringerung der Durchlässigkeit aufhebt, wenn das Erfassungsergebnis des Statuserfassungs-Abschnitts (120) eine Beendigung einer Rückwärtsbewegung des Fahrzeugs anzeigt.

4. Verdunkelungsglas-Steuerungsvorrichtung (100) nach einem der Ansprüche 1 bis 3,
wobei der Statuserfassungs-Abschnitt (120) so ausgeführt ist, dass er sowohl den Helligkeits-/Dunkelheits-Status, den Wetter-Status, den Status der Anschalt-Anweisung, den Status der Betätigungs-Anweisung als auch den Bewegungs-Status erfasst,
und der Steuerungs-Abschnitt (130) so ausgeführt ist, dass er die Verringerung der Durchlässigkeit unterbindet, wenn das Erfassungsergebnis des Statuserfassungs-Abschnitts (120) sowohl den Dunkel-Status, den Regen-Status, den Licht-An-Status, den Scheibenwischer-An-Status als auch den Rückwärtsbewegungs-Status anzeigt.

5. Verdunkelungs-Steuerungssystem (1), das umfasst:
ein Verdunkelungsglas (11), das eine Verdunkelungsfolie (11b) einschließt, die an einer Heckscheibe (11a) für ein Fahrzeug angeordnet ist, wobei die Verdunkelungsfolie (11b) eine Durchlässigkeit für Licht aufweist, die in Abhängigkeit von Anlegen einer Wechselspannung geändert wird, sowie
die Verdunkelungsglas-Steuerungsvorrichtung (100) nach einem der Ansprüche 1 bis 4, die so ausgeführt ist, dass sie die Durchlässigkeit der Verdunkelungsfolie (11b) des Verdunkelungsglases (11) steuert.

## Revendications

1. Dispositif de commande de verre de gradation (100) pour un verre de gradation (11), le verre de gradation (11) incluant un film de gradation (11b) disposé sur une vitre arrière (11a) pour un véhicule, dans lequel le film de gradation (11b) présente une transmission de lumière qui est modifiée selon une application d'une tension CA, le dispositif de commande de verre de gradation (100) comprenant :
une section d'application de tension (110) configurée pour modifier la transmission par une application ou une non-application de la tension CA au film de gradation (11b) ;
une section de détection de statut (120) configurée pour détecter au moins un statut d'un statut de luminosité/obscurité dans un extérieur du véhicule, un statut météorologique, un statut d'instruction d'activation pour un phare, un statut d'instruction de fonctionnement pour un essuie-glace arrière au cas où l'essuie-glace arrière est disposé dans le véhicule ou un statut de mouvement du véhicule ; et
une section de commande (130) configurée pour faire en sorte que la section d'application de tension (110) selon une instruction prédéterminée réduise la transmission du film de gradation (11b),
**caractérisé en ce que**
la section de commande (130) est configurée en outre pour empêcher une réduction de la transmission par la section d'application de tension (110), sur un résultat de détection de la section de détection de statut (120) indiquant au moins un état des états suivants :
un état sombre à l'extérieur du véhicule qui est égal à ou plus sombre qu'un degré prédéterminé ;
un état pluvieux ;
un état de phare allumé pour lequel un allumage du phare a été commandé ;
un état d'essuie-glace activé pour lequel un fonctionnement de l'essuie-glace arrière a été commandé ; ou
un état de marche arrière dans lequel le véhicule se déplace vers l'arrière.

2. Le dispositif de commande de verre de gradation (100) selon la revendication 1,
dans lequel au cours de la réduction de la transmission pour le film de gradation (11b), la section de commande (130) est configurée pour faire revenir la transmission à un état antérieur à la réduction lorsque le résultat de détection de la section de détection de statut (120) indique l'au moins un état.

3. Le dispositif de commande de verre de gradation (100) selon la revendication 1 ou 2,
dans lequel la section de détection de statut (120) est configurée pour détecter au moins le statut de mouvement,
dans lequel après un empêchement de la réduction de la transmission, la section de commande (130) est configurée pour annuler l'empêchement de la réduction de la transmission lorsque le résultat de détection de la section de détection de statut (120) indique un arrêt d'une marche arrière du véhicule.

4. le dispositif de commande de verre de gradation (100) selon l'une quelconque des revendications 1 à 3,
dans lequel la section de détection de statut (120) est configurée pour détecter la totalité du statut de luminosité/obscurité, du statut météorologique, du statut d'instruction de commutation, du statut d'instruction de fonctionnement et du statut de mouvement,
dans lequel la section de commande (130) est configurée pour empêcher la réduction de la transmission sur le résultat de détection de la section de détection de statut (120) indiquant la totalité de l'état sombre, de l'état pluvieux, de l'état de phare allumé, de l'état d'essuie-glace en fonctionnement et de l'état de marche arrière.

5. Système de commande de gradation (1) comprenant :
un verre de gradation (11) incluant un film de gradation (11b) disposé sur une vitre arrière (11a) pour un véhicule, dans lequel le film de gradation (11b) présente une transmission de lumière qui est modifiée selon une application d'une tension CA ; et
le dispositif de commande de verre de gradation (100) selon l'une quelconque des revendications 1 à 4 configuré pour commander la transmission du film de gradation (11b) du verre de gradation (11).
